# EUROPEAN PATENT SPECIFICATION

(11) **EP 3 206 210 B1**
(45) Date of publication and mention of the grant of the patent: **21.07.2021**
(21) Application number: 17150876.5
(22) Date of filing: 10.01.2017
(51) Int. Cl.: G21F 1/04, G21F 5/12, G21F 5/00, G21F 5/005, G21F 5/008, G21F 5/002

(54) **CONCRETE CONTAINER AND MANUFACTURING METHOD THEREOF**
BETONBEHÄLTER UND HERSTELLUNGSVERFAHREN DAFÜR
RÉCIPIENT EN BÉTON ET SON PROCÉDÉ DE FABRICATION

(30) Priority: 13.01.2016 JP 2016004203
(43) Date of publication of application: 16.08.2017
(73) Proprietor: SE Corporation, Tokyo 163-1343 (JP)
(72) Inventor: HISAGA, Yasuro, Tokyo 163-1343 (JP); TAKIZAWA, Tsutomu, Tokyo 163-1343 (JP)
(74) Representative: Vossius & Partner Patentanwälte Rechtsanwälte mbB

(56) References cited:
- WO-A1-03/065380
- WO-A1-2004/051671
- US-A- 4 377 509

## Description

Priority is claimed on Japanese Patent Application No. 2016-004203, filed on January 13, 2016.

### Technical Field

The present invention relates to a container, especially made of concrete.

### Background Art

It is known that a concrete container for shielding radiation can be used for storing radioactive waste, such as soil contaminated by radioactive materials splattered by a nuclear accident, such as ¹³¹I (Iodine 131), ¹³⁴Cs (Cesium 134) or ¹³⁷Cs (Cesium 137).

It is also known that increment of shield materials in weight can improve shielding performance against radiation. This can be achieved by increasing thickness of a container wall. For example, 23cm wall made of normal-weight concrete shields 85% of y(gamma)-ray radiated from ¹³⁷Cs, which has a half-life of about 30 years.

Increasing density of the container wall can also achieve the increment of shield materials. This is a reason for replacing the normal-weight concrete, which has a density, or specific gravity, of about 2 to 2.5g/cm³, with heavyweight concrete, which has a density of 3.5g/cm³ or higher, which is achieved by using heavyweight aggregates with high density. This enables to reduce the thickness of the container wall. See, for example, Fujikura et al., "Development of high performance radiation shielding containers for contaminated soil in Fukushima", Fujuta Technology Research Report, Vol. 48, pp. 61-66, 2012.

For example, magnetite, iron pieces, iron powder, or steel balls can be used as the heavyweight aggregates.

### Summary of Invention

### Problem to be Solved

Intrusion of air into the concrete may result in neutralization of the concrete. Intrusion of chloride ion into the concrete may result in chloride damage. Intrusion of water into the heavyweight concrete where iron is used as aggregates may result in corrosion of the aggregates, and thereby generation of cracks in the heavyweight concrete. This may reduce the radiation shielding capability of the heavyweight concrete, or in the worst case, produce leakage of the radioactive pollutant through the cracks.

The present invention aims to solve such problems, for example.

### Means to Solve

A concrete container includes a first concrete, and a second concrete. The first concrete has a vessel shape with an outer surface and an inner surface. The second concrete coats the outer surface of the first concrete. The first concrete is more capable for shielding radiation than the second concrete. The radiation shielding capability may be measured by radiation shielding ratio per unit thickness. The second concrete is less permeable than the first concrete. The permeability is measured by hydraulic transmissivity, air permeability, or ionic diffusivity.

The concrete container may include a third concrete. The third concrete may coat the inner surface of the first concrete. The first concrete may be more capable for shielding radiation than the third concrete. The third concrete may be less permeable than the first concrete.

The first concrete may have density higher than that of the second concrete.

The second concrete may include no bubbles. The second concrete may include less bubbles than the first concrete does.

The first concrete may be used as a form to make the second concrete. The second concrete may be used as a form to make the first concrete. The third concrete may be used as an inner form to make the first concrete.

First, cement paste may be put into a form. Next, aggregates may be put into the form to make first fresh concrete.

First, aggregates may be put into a form. Next, cement paste may be put into the form to make first fresh concrete.

Then, the first fresh concrete is solidified to make the first concrete.

Second fresh concrete may be put into a form. Then, the second fresh concrete may be solidified with defoaming to make the second concrete.

Third fresh concrete may be put into a form. Then, the third fresh concrete may be solidified with defoaming to make the third concrete.

### Advantageous Effects of Invention

When radioactive pollutant is accommodated in the concrete container, the first concrete shields radiation radiated from the radioactive pollutant. However, intrusion of water into the first concrete might damage the radiation shielding capability of the first concrete. For example, aggregates might get rusted in the first concrete. The second concrete prevents intrusion of water from outside into the first concrete. This enables to prevent damaging the radiation shielding capability of the first concrete.

Also, intrusion of the radioactive pollutant into the first concrete might virtually reduce the thickness of the first concrete contributing to shield radiation radiated from the radioactive pollutant. This results in degradation of radiation shielding capability of the first concrete. The third concrete prevents the first concrete from being intruded by radioactive pollutant, such as water exuded from polluted soil in the concrete container. This enables maximizing the radiation shielding capability of the first concrete.

High density of the first concrete enhances the radiation shielding capability of the first concrete.

No or few bubbles included in the second concrete reduces the permeability of the second concrete.

Using the first concrete as a form to make the second concrete enables to prevent generation of voids between the first concrete and the second concrete. Using the second concrete as a form to make the first concrete also enables to prevent generation of voids between the first concrete and the second concrete. Using the third concrete as a form to make the first concrete enables to prevent generation of voids between the first concrete and the third concrete. Furthermore, time and effort for making forms can be reduced.

Cement paste and aggregates separately put into the form to make fresh concrete in the form homogenizes distribution of the aggregates. This enable to promote the radiation shielding capability of the first concrete.

Fresh concrete solidified with defoaming in the form reduces or eliminates bubbles in the concrete. This enables to reduce permeability of the second and/or third concrete.

### Brief Description of Drawings

Referring to the accompanying drawings, embodiments will be described in detail. The embodiments and the drawings are provided only for more complete understanding of the present invention. They are not intended to limit the present invention in any meanings.
Fig. 1 is a sectional side view illustrating an example of a concrete container 10;
Fig. 2 is a plan view illustrating an example of a body 12;
Figs. 3 and 4 are sectional side views illustrating examples of a second concrete 22 and an inner form 41;
Figs. 5 to 10 are sectional side views illustrating an example of process for making a first concrete 21;
Fig. 11 is a sectional side view illustrating another example of the concrete container 10;
Fig. 12 is a plan view illustrating another example of the body 12;
Fig. 13 is a sectional side view illustrating an example of a third concrete 23;
Figs. 14 to 17 are sectional side views illustrating another example of process for making the first concrete 21;
Figs. 18 and 19 are a sectional side view and a plan view illustrating yet another example of the body 12;
Fig. 20 is a sectional side view illustrating another example of the lid 13; and
Figs. 21 to 25 are sectional side views illustrating an example of process for manufacturing the body 12.

### Embodiments

### First Embodiment

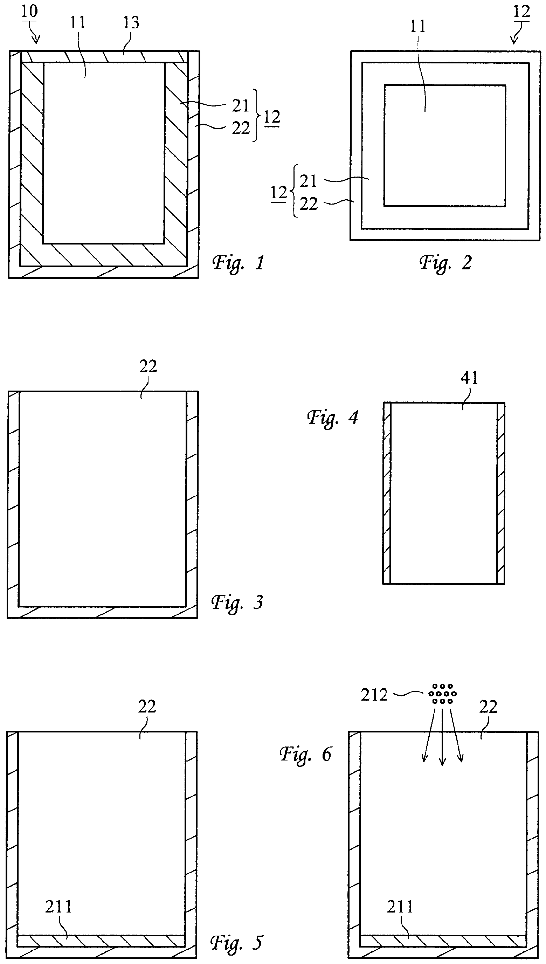

As shown in Fig. 1, a concrete container (10) includes a body (12) and a lid (13). For example, the concrete container (10) has a rectangular parallelepiped shape with a width of about 1.5m and a height of about 2.5m.

As shown in Fig. 2, the body (12) has a rectangular parallelepiped box shape with opening upside. For example, the bottom face of the body (12) has a square shape with a side of 1400mm. The body (12) has an accommodation space (11) inside. The accommodation space (11) is for accommodating substance such as radioactive pollutant.

The lid (13) has a rectangular plate shape. The lid (13) is for being put on the body (12) to close the opening of the body (12).

However, the body (12) may have other vessel shapes, such as a cylindrical tubular shape and the like. The lid (13) may have other shapes, such as a disc shape and the like, insofar as it can close the opening of the body (12).

The body (12) includes a first concrete (21) and a second concrete (22).

The first concrete (21) has a vessel shape. The second concrete (22) coats an outer surface of the first concrete (21). For example, the first concrete (21) has a thickness of 45mm, and the second concrete (22) has a thickness of 17.5mm.

The first concrete (21) has higher capability for shielding radiation than normal-weight concrete. For example, the first concrete (21) is heavyweight concrete, which has higher density, e.g., 5.0g/cm³ or 5.8g/cm³, than normal-weight concrete.

The second concrete (22) has lower permeability than normal-weight concrete. For example, the second concrete (22) is defoamed concrete, which includes no or less bubbles than normal-weight concrete.

The permeability of the first concrete (21) and the radiation shielding capability of the second concrete (22) may be roughly the same as those of normal-weight concrete. Thus, the first concrete (21) is more capable for shielding radiation and more permeable than the second concrete (22).

The first concrete (21) may be manufactured by a method developed by Applicant, called as "Inversed Prepacked Method," and disclosed in Japanese Patent Application No. 2015-222913.

The second concrete (22) may be ultrahigh strength concrete developed by Applicant and known as "ESCON", which may be manufactured by a method disclosed in Japanese Patent No. 5358750.

Basic performances of ESCON are shown below. For comparison, common values of normal-weight concrete are shown in parentheses.
(1) Air permeability: 4.2×10⁻²⁰m^{2 (}10⁻¹⁷ to 10⁻¹⁵m²)
(2) Hydraulic transmissivity: 0cm/s (10⁻¹¹ to 10⁻¹⁰cm/s), measured by the input method under applying pressure of 0.5MPa for 56 days.
(3) Diffusion coefficient of chloride ion: 0cm²/year (0.14 to 0.9cm²/year), measured by the electrophoresis method when 730 days passed.
(4) Void ratio: about 6 volume % (about 10 volume %), including synthetic fiber.
(5) Compressive strength: 150MPa
(6) Bending strength: 15MPa
(7) Specific gravity: 2.4

The lid (13) may be concrete with roughly the same composition or performance as the second concrete (22).

High radiation shielding capability of the first concrete (21) prevents leakage of radiation radiated from the radioactive pollutant accommodated in the accommodation space (11).

Low permeability of the second concrete (22) prevents intrusion of water, air, and chloride ion from outside into the first concrete (21). This enables to prevent degradation of the first concrete (21), and thereby to maintain the radiation shielding capability for a long time.

The lid (13) put on the body (12) covers a part where the first concrete (21) is exposed outside. This enables to prevent intrusion of water, air, and chloride ion from outside into the first concrete (21).

### Method For Manufacturing The Body (12) Of The First Embodiment

### (1) Making The Second Concrete (22)

First, A form is provided, which has a shape fitting with that of the second concrete (22). For example, the form has a thickness of about 4.5mm.

Next, fresh concrete is placed into the form. For example, the fresh concrete includes the following raw materials. The numbers show ratios by weight.
(a) Silica fume cement: 1;
(b) Water: 0.13;
(c) Water reducing agent: 0.2;
(d) Silica sand with particle diameters of about 0.5mm: 2; and
(e) Polyvinyl alcohol fiber: 1.5

The raw materials may be mixed in advance, or may separately be put into the form and mixed in the form.

Then, the fresh concrete is solidified with defoaming in the form. For example, the form accommodating the fresh concrete is put into a vacuum vessel, and the pressure is reduced in the vacuum vessel, so as to defoam the fresh concrete. In addition, the form may be vibrated to facilitate the defoaming.

In this manner, the second concrete (22) is made, which has a tubular shape with a bottom as shown in Fig. 2.

The second concrete (22) may be made by the method disclosed in Japanese Patent No. 5358750.

### (2) Making The first Concrete (21)

First, an inner form (41) is provided, which has a shape fitting with that of the inner surface of the first concrete (21), as shown in Fig. 4. The inner form (41) may have a shape with or without a bottom.

Next, cement paste (211) is put into a inner space surrounded by the second concrete (22), as shown in Fig. 5. The cement paste (211) includes cement and water. The cement may contain Portland cement. The Portland cement may have particle diameters of about 10µm The cement may contain one or more types of admixtures, such as silica fume, fly ash, calcium carbonate powder, and the like. The admixtures may have particle diameters of 1µm or smaller. A weight ratio of the admixtures in the cement may be no less than 5%, and may be no more than 20%. A weight ratio of the water to the cement may be 15% or more, and may be 25% or less.

The cement paste 211 may include water reducing agent. A weight ratio of the water reducing agent to the cement may be more than 0.1%, or preferably more than 0.2%, and may be less than 1.0%, or preferably less than 0.5%. The cement paste 211 may include thickening agent. A weight ratio of the thickening agent to the cement may be 1% or less. The cement paste 211 may include reinforcing materials, such as short fibers.

The cement paste (211) is preferable to have high fluidity.

For example, the cement paste (211) includes the following raw materials. The numbers show ratios by weight.
(a) Silica fume cement, sold by Ube Mitsubishi Cement Corp.: 10;
(b) Water: 2; and
(c) Water reducing agent, which is sold with a trade name "MasterGlenium SP8HU" by BASF: 0.1

The raw materials may be mixed in advance, or may separately be put into the second concrete 22, and then mixed in the second concrete 22.

Then, aggregates (212) are put into the cement paste (211) in the inner space surrounded by the second concrete (22), as shown in Fig. 6. The aggregates (212) may contain one or more types of high density materials, such as iron, steel, tungsten, lead and other metals. A weight ratio of the aggregates (212) to the cement is 5 or more times, and is 10 or less times. The aggregates (212) may have a shape with unlikelihood of causing voids in the concrete. The aggregates (212) may have a solid and simple shape, such as spheres, cylinders, or prisms. The aggregates (212) with various shapes may be mixed. The aggregates (212) has a maximum dimension of 1mm or larger, and minimum dimension of 0.3mm or larger. The aggregates (212) may have a sphere shape with a diameter no more than 6% of thickness of the first concrete (21). Steel balls for shot blast processing, pachinko balls, balls for bearing, screws, washers, nuts, or the like may be used as the aggregates (212). A cutter machine or the like may be used for cutting wire rods to make the aggregates (212). A slasher machine or the like may be used for crushing scrap to make the aggregates (212).

In this manner, the cement paste (211) and the aggregates (212) are separately put into the inner space surrounded by the second concrete (22), to make fresh concrete in the inner space surrounded by the second concrete (22).

And, the fresh concrete is solidified to make a bottom part of the first concrete (21).

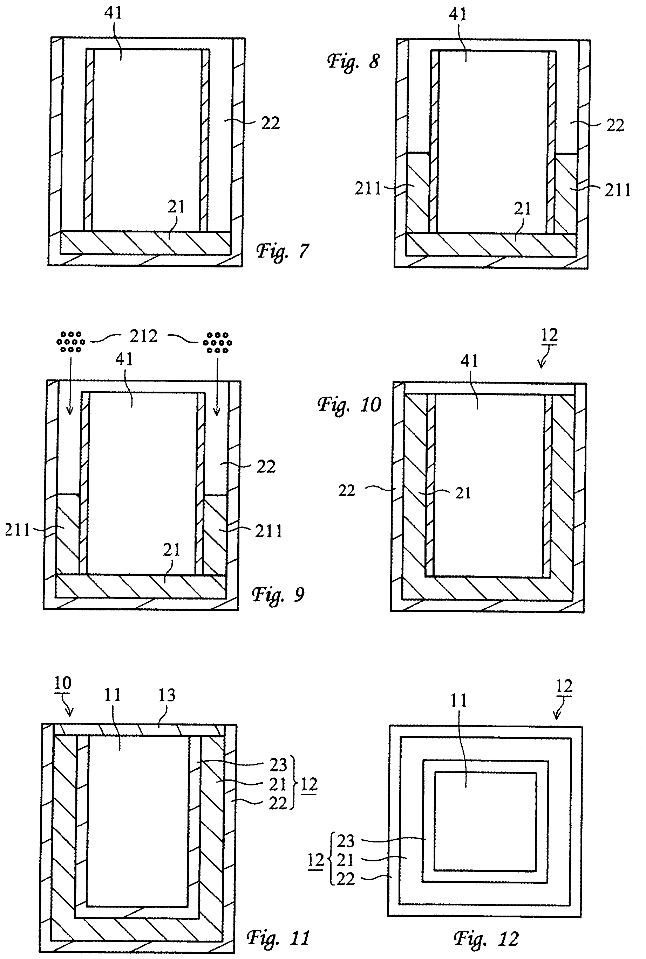

Next, the inner form (41) is put on the bottom part of the first concrete (21), as shown in Fig. 7.

Then, cement paste (211) is put into a gap between the inner form (41) and the second concrete (22), as shown in Fig. 8.

And, aggregates (212) are put into the cement paste (211) in the gap between the inner form (41) and the second concrete (22), to make fresh concrete, as shown in Fig. 9.

Then, the fresh concrete is solidified to make a side part of the first concrete (21), as shown in Fig. 10.

Finally, the inner form (41) is removed.

In this manner, the second concrete (22) is used as an outer form for making the first concrete (21). This enables to prevent voids from being generated between the first concrete (21) and the second concrete (22). Also, this enables reduction of time and effort to produce an outer form for making the first concrete (21).

Making fresh concrete in the inner space surrounded by the second concrete (22) enables to homogeneously distribute the aggregates (212) in the cement paste (211). This enhances the radiation shielding capability of the first concrete (21).

Putting the aggregates (212) into the form may precede putting the cement paste (211) into the form.

### Second Embodiment

As shown in Fig. 11, a concrete container (10) includes a body (12) and a lid (13), in the same manner as the first embodiment.

The body (12) includes a first concrete (21) and a second concrete (22), in the same manner as the first embodiment. As shown in Fig. 12, the body (12) further includes a third concrete (23).

The third concrete (23) coats an inner surface of the first concrete (21). For example, the third concrete (23) has a thickness of 17.5mm.

The third concrete (23) has lower permeability than normal-weight concrete, in the same manner as the second concrete (22). For example, the third concrete (23) is defoamed concrete, which includes no or less bubbles than normal-weight concrete.

The third concrete (23) may be ESCON, in the same manner as the second concrete (22).

Low permeability of the third concrete (23) prevents intrusion of water, air, chloride ion and the like, e.g., exuded from the radioactive pollutant accommodated in the accommodation space (11), into the first concrete (21). This enables to prevent degradation of the first concrete (21), and thereby to maintain the radiation shielding capability for a long time.

The third concrete (23) may be connected with the second concrete (22). The first concrete (21) may be completely coated with the second concrete (22) and the third concrete (23). This enables to prevent degradation of the first concrete (21), and thereby to maintain the radiation shielding capability for a long time.

### Method For Manufacturing The Body (12) Of The Second Embodiment

### (1) Making The Second Concrete (22)

The second concrete (22) is made in the same manner as the first embodiment.

### (2) Making The Third Concrete (23)

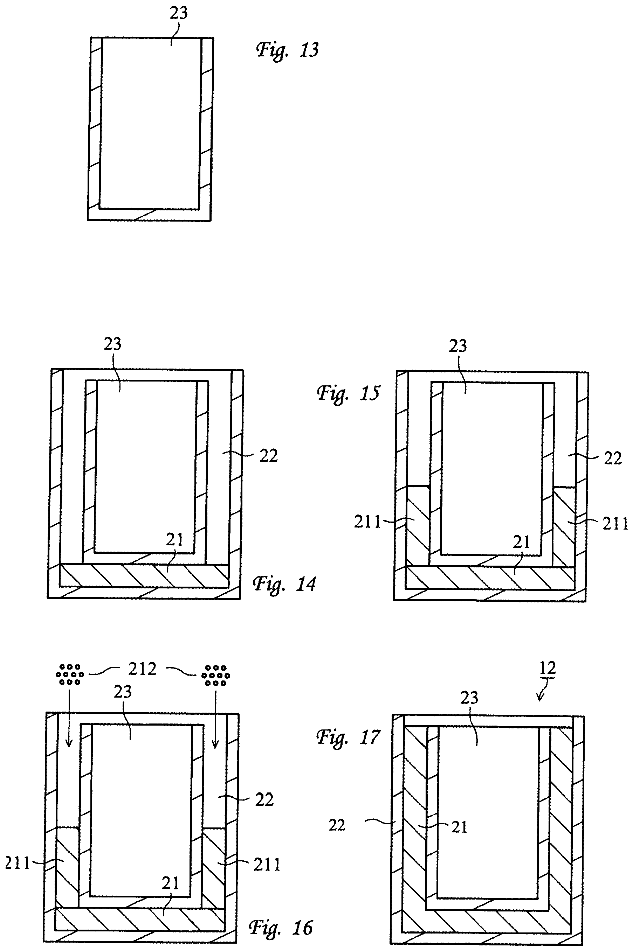

In the same manner as the second concrete (22), the third concrete (23) is made, which has a tubular shape with a bottom as shown in Fig. 13.

### (3) Making The First Concrete (21)

The first concrete (21) is made in the same manner as the first embodiment, except that the third concrete (23) is substituted for the inner form (41), as shown in Figs. 14 to 17.

In this manner, the third concrete (23) is used as an inner form for making the first concrete (21). This enables to prevent voids from being generated between the first concrete (21) and the third concrete (23). Also, this enables reduction of time and effort to produce an inner form for making the first concrete (21).

### Third embodiment

An concrete container (10) includes a body (12) and a lid (13), in the same manner as the first and second embodiments.

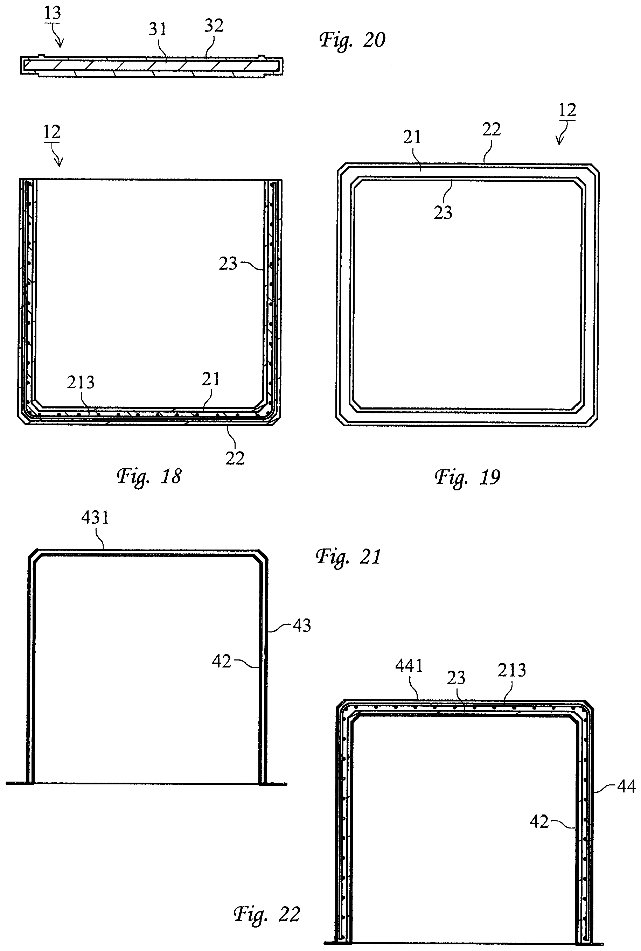

As shown in Figs. 18 and 19, the body (12) includes a first concrete (21), a second concrete (22), and a third concrete (23).

The first concrete (21) is reinforced concrete with reinforcing steels inside. The first concrete (21) has more capable for shielding radiation than normal-weight concrete, in the same manner as the first and second embodiment.

The second concrete (22) and the third concrete (23) have less permeable than normal-weight concrete, in the same manner as the second embodiment.

As shown in Fig. 20, the lid (13) includes a fourth concrete (31) and a fifth concrete (32). The fifth concrete (32) coats a whole surface of the fourth concrete (31).

The fourth concrete (31) has more capable for shielding radiation than normal-weight concrete, in the same manner as the first concrete (21). The fourth concrete (31) may be reinforced concrete.

The fifth concrete (32) has less permeable than normal-weight concrete, in the same manner as the second concrete (22) and the third concrete (23).

Since the first concrete (21) is reinforced concrete, strength of the body (12) is enhanced.

The first concrete (21) is coated completely except its upper end. This reduces the distance between the first concrete (21) and the fourth concrete (31) when the lid (13) is put on the body (12), and thereby enhances the radiation shielding capability. The lid (13) put on the body (12) covers the upper end, where the first concrete (21) is exposed. This enables to prevent intrusion of water, air, chloride ion and the like through the upper end into the first concrete (21).

High radiation shielding capability of the fourth concrete 31 prevents leakage of radiation, radiated from the radioactive pollutant accommodated in the accommodation space 11, through the lid 13.

Low permeability of the fifth concrete (32) prevents intrusion of water, air, chloride ion and the like from outside, or exuded from the radioactive pollutant accommodated in the accommodation space (11), into the fourth concrete (31). This enables to prevent degradation of the fourth concrete (31), and thereby to maintain the radiation shielding capability for a long time.

### Method For Manufacturing The Body (12) Of The Third Embodiment

### (1) Making The Third Concrete (23)

First, an inner form (42) and an outer form (43) are disposed as shown in Fig. 21. The inner form (42) has a shape fitting with that of the inner surface of the third concrete (23) turned upside down, such as a tubular shape with a plate upside and a flange downside. The outer form (43) has a shape fitting with that of the outer surface of the third concrete (23) turned upside down, such as a tubular shape with openings upside and downside. The upside opening (431) of the outer form (43) corresponds to the bottom face of the third concrete (23). The inner form (42) and the outer form (43) have thickness of 4.5mm, for example.

Next, fresh concrete is placed through the upside opening (431) of the outer form (43) into a gap between the inner form (42) and the outer form (43).

Then, the fresh concrete is solidified with defoaming.

### (2) Making The First Concrete (21)

First, the outer form (43) is removed from the third concrete (23).

Next, the reinforcing steels (213) are disposed around the third concrete (23), and an outer form (44) is disposed around the reinforcing steels (213), as shown in Fig. 22. The outer form (44) has a shape fitting with that of the outer surface of the first concrete (21) turned upside down, such as a tubular shape with openings upside and downside. The upside opening (441) of the outer form (44) corresponds to the bottom face of the first concrete (21).

Then, cement paste is put through the upside opening (441) of the outer form (44) into a gap between the third concrete (23) and the outer form (44).

And, aggregates are put through the upside opening (441) of the outer form (44) into the cement paste in the gap between the third concrete (23) and the outer form (44), to make fresh concrete.

Finally, the fresh concrete is solidified.

### (3) Making The Second Concrete (22)

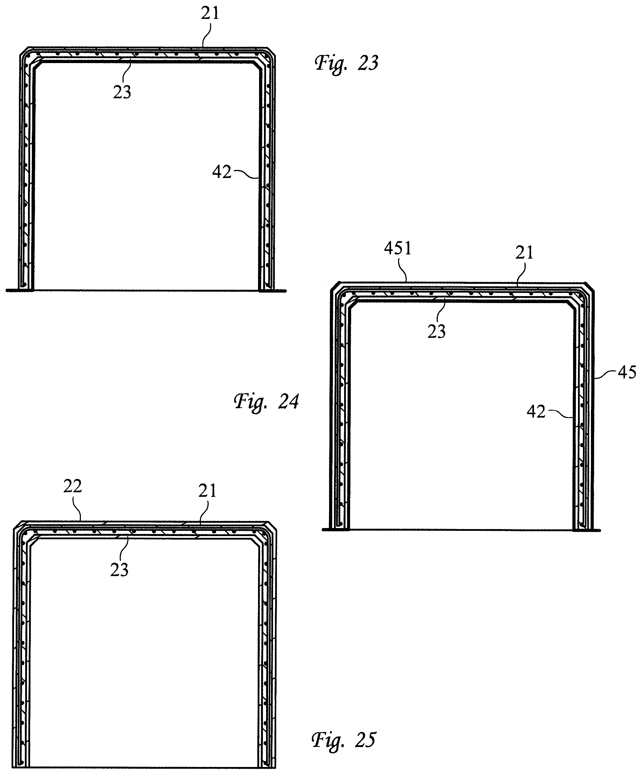

First, the outer form (44) is removed from the first concrete (21), as shown in Fig. 23.

Next, an outer form (45) is disposed around the first concrete (21), as shown in Fig. 24. The outer form (45) has a shape fitting with that of the outer surface of the second concrete (22) turned upside down, such as a tubular shape with openings upside and downside. The upside opening (451) of the outer form (45) corresponds to the bottom face of the second concrete (22).

Then, fresh concrete is placed through the upside opening (451) of the outer form (45) into a gap between the first concrete (21) and the outer form (45).

And, the fresh concrete is solidified with defoaming.

Finally, the inner form (42) and the outer form (45) are removed, as shown in Fig. 25.

In this manner, the body 12 is manufactured in the upside down state. This enables to prevent seams from being generated between the bottom part and the side part of the first concrete 21.

The third concrete (23) is used as an inner form for making the first concrete (21). This enables to prevent voids from being generated between the first concrete (21) and the third concrete (23). Also, this enables reduction of time and effort to produce an inner form for making the first concrete (21).

The first concrete (21) is used as an inner form for making the second concrete (22). This enables to prevent voids from being generated between the first concrete (21) and the second concrete (22). Also, this enables reduction of time and effort to produce an inner form for making the second concrete (22).

The above described embodiments are examples to make it easier to understand the present invention. The present invention is not limited to the example, and includes any modified, altered, added, or removed variations, without departing from the scope of the claims attached herewith. This can be easily understood by persons skilled in the art.

### Reference Signs List

10: concrete container; 11: accommodation space; 12: body; 13: lid; 21: first concrete; 211: cement paste; 212: aggregate; 213: reinforcing steel; 22: second concrete; 23: third concrete; 31: fourth concrete; 32: fifth concrete; 41 and 42: inner form; 43 to 45: outer form; 431, 441, and 451: upside opening; and 80: radioactive pollutant.

## Claims

1. A concrete container (10), comprising:
a first concrete (21), having a vessel shape with an outer surface and an inner surface; and
a second concrete (22), coating the outer surface of the first concrete (21),
**characterized in that** the first concrete (21) is more capable for shielding radiation than the second concrete (22), and
the second concrete (22) is less permeable than the first concrete (21), wherein the permeability is measured as hydraulic transmissivity, air permeability or ionic diffusivity.

2. The concrete container (10) of Claim 1,
wherein the first concrete is made of at least cement and aggregates (212), and
a weight ratio of the aggregates (212) to the cement is 5 or more times and 10 or less times.

3. The concrete container (10) of Claim 1 or 2, further comprising
a third concrete (23), coating the inner surface of the first concrete (21),
wherein the first concrete (21) is more capable for shielding radiation than the third concrete (23), and
the third concrete (23) is less permeable than the first concrete (21), wherein the permeability is measured as hydraulic transmissivity, air permeability or ionic diffusivity.

4. The concrete container (10) of anyone of Claims 1 to 3,
wherein the first concrete (21) has density higher than that of the second concrete (22).

5. The concrete container (10) of anyone of Claims 1 to 4,
wherein the second concrete (22) includes no or less bubbles than the first concrete (21) does.

6. A method for manufacturing a concrete container (10),
wherein the concrete container (10) includes:
a first concrete (21), having a vessel shape with an outer surface and an inner surface; and
a second concrete (22), coating the outer surface of the first concrete (21), and
one of the first and second concrete (21, 22) is used as a form to make another of the first and second concrete (21, 22),
the first concrete is made by putting cement paste (211) and aggregates (212) separately into a form to make first fresh concrete, and solidifying the first fresh concrete in the form,
**characterized in that** the first concrete (21) is more capable for shielding radiation than the second concrete (22) , and the second concrete (22) is less permeable than the first concrete (21), wherein the permeability is measured as hydraulic transmissivity, air permeability or ionic diffusivity.

7. The method of Claim 6,
wherein the cement paste (211) includes cement, and
a weight ratio of the aggregates (212) to the cement is 5 or more times and 10 or less times.

8. The method of Claim 6 or 7,
wherein the cement paste (211) is put into the form,
then the aggregates (212) are put into the form to make the first fresh concrete, and the first fresh concrete is solidified to make the first concrete (21).

9. The method of Claim 6 or 7,
wherein the aggregates (212) are put into the form,
then the cement paste (211) is put into the form to make the first fresh concrete, and the first fresh concrete is solidified to make the first concrete (21).

10. The method of anyone of Claims 6 to 9,
wherein second fresh concrete is put into a form,
then the second fresh concrete is solidified with defoaming to make the second concrete.

11. The method of anyone of Claims 6 to 10,
wherein the concrete container (10) further includes a third concrete (23), coating the inner surface of the first concrete (21), and the third concrete (23) is used as an inner form to make the first concrete (21).

12. The method of Claim 11,
wherein third fresh concrete is put into a form,
then the third fresh concrete is solidified with defoaming to make the third concrete.

## Patentansprüche

1. Betonbehälter (10), aufweisend:
einen ersten Beton (21), der eine Gefäßform mit einer Außenfläche und einer Innenfläche aufweist;
und
einen zweiten Beton (22), der die Außenseite des ersten Betons (21) bedeckt,
**dadurch gekennzeichnet, dass** der erste Beton (21) besser zum Abschirmen von Strahlung in der Lage ist als der zweite Beton (22), und
der zweite Beton (22) weniger durchlässig als der erste Beton (21) ist, wobei die Durchlässigkeit als hydraulische Transmissivität, Luftdurchlässigkeit oder Ionendiffusivität gemessen wird.

2. Betonbehälter (10) nach Anspruch 1,
wobei der erste Beton mindestens aus Zement und Zuschlagstoffen (212) hergestellt ist und ein Gewichtsverhältnis der Zuschlagstoffe (212) zum Zement mindestens 5 zu 1 und höchstens 10 zu 1 beträgt.

3. Betonbehälter (10) nach Anspruch 1 oder 2, ferner umfassend:
einen dritten Beton (23), der die Innenfläche des ersten Betons (21) bedeckt,
wobei der erste Beton (21) besser zum Abschirmen von Strahlung in der Lage ist als der dritte Beton (23), und
der dritte Beton (23) weniger durchlässig als der erste Beton (21) ist, wobei die Durchlässigkeit als hydraulische Transmissivität, Luftdurchlässigkeit oder Ionendiffusivität gemessen wird.

4. Betonbehälter (10) nach einem der Ansprüche 1 bis 3,
wobei der erste Beton (21) eine Dichte aufweist, die höher als die des zweiten Betons (22) ist.

5. Betonbehälter (10) nach einem der Ansprüche 1 bis 4,
wobei der zweite Beton (22) keine oder weniger Blasen als der erste Beton (21) umfasst.

6. Verfahren zur Herstellung eines Betonbehälters (10),
wobei der Betonbehälter (10) umfasst:
einen ersten Beton (21), der eine Gefäßform mit einer Außenfläche und einer Innenfläche aufweist;
und
einen zweiten Beton (22), der die Außenfläche des ersten Betons (21) bedeckt, und
einer des ersten bzw. zweiten Betons (21, 22) als Form zum Herstellen eines jeweils anderen des ersten bzw. zweiten Betons (21, 22) verwendet wird,
der erste Beton durch getrenntes Geben von Zementpaste (211) und Zuschlagstoffen (212) in eine Form zum Herstellen eines ersten frischen Betons und Verfestigen des ersten frischen Betons in der Form hergestellt wird,
**dadurch gekennzeichnet, dass** der erste Beton (21) besser zum Abschirmen von Strahlung in der Lage ist als der zweite Beton (22) und der zweite Beton (22) weniger durchlässig als der erste Beton (21) ist, wobei die Durchlässigkeit als hydraulische Transmissivität, Luftdurchlässigkeit oder Ionendiffusivität gemessen wird.

7. Verfahren nach Anspruch 6,
wobei die Zementpaste (211) Zement umfasst und
ein Gewichtsverhältnis der Zuschlagstoffe (212) zum Zement mindestens 5 zu 1 und höchstens 10 zu 1 beträgt.

8. Verfahren nach Anspruch 6 oder 7,
wobei die Zementpaste (211) in die Form gegeben wird,
dann die Zuschlagstoffe (212) in die Form gegeben werden, um den ersten frischen Beton herzustellen, und der erste frische Beton verfestigt wird, um den ersten Beton (21) herzustellen.

9. Verfahren nach Anspruch 6 oder 7,
wobei die Zuschlagstoffe (212) in die Form gegeben werden,
dann die Zementpaste (211) in die Form gegeben wird, um den ersten frischen Beton herzustellen, und der erste frische Beton verfestigt wird, um den ersten Beton (21) herzustellen.

10. Verfahren nach einem der Ansprüche 6 bis 9,
wobei ein zweiter frischer Beton in eine Form gegeben wird, dann der zweite frische Beton mit Entschäumung verfestigt wird, um den zweiten Beton herzustellen.

11. Verfahren nach einem der Ansprüche 6 bis 10,
wobei der Betonbehälter (10) ferner einen dritten Beton (23) umfasst, der die Innenfläche des ersten Betons (21) bedeckt, und der dritte Beton (23) als innere Form zum Herstellen des ersten Betons (21) verwendet wird.

12. Verfahren nach Anspruch 11,
wobei ein dritter frischer Beton in eine Form gegeben wird, dann der dritte frische Beton mit Entschäumung verfestigt wird, um den dritten Beton herzustellen.

## Revendications

1. Récipient en béton (10), comprenant :
un premier béton (21), présentant une forme de cuve avec une surface externe et une surface interne ; et
un second béton (22), revêtant la surface externe du premier béton (21),
**caractérisé en ce que** le premier béton (21) est plus apte à faire écran au rayonnement que le second béton (22), et
le second béton (22) est moins perméable que le premier béton (21), dans lequel la perméabilité est mesurée comme transmissivité hydraulique, perméabilité à l'air ou diffusivité ionique.

2. Récipient en béton (10) selon la revendication 1,
dans lequel le premier béton est constitué au moins de ciment et d'agrégats (212), et un rapport de masse des agrégats (212) au ciment est de 5 fois ou plus et 10 fois ou moins.

3. Récipient en béton (10) selon la revendication 1 ou 2, comprenant de plus un troisième béton (23) revêtant la surface interne du premier béton (21),
dans lequel le premier béton (21) est plus apte à faire écran au rayonnement que le troisième béton (23), et
le troisième béton (23) est moins perméable que le premier béton (21), dans lequel la perméabilité est mesurée comme transmissivité hydraulique, perméabilité à l'air ou diffusivité ionique.

4. Récipient en béton (10) selon l'une quelconque des revendications 1 à 3,
dans lequel le premier béton (21) présente une densité supérieure à celle du second béton (22).

5. Récipient en béton (10) selon l'une quelconque des revendications 1 à 4,
dans lequel le second béton (22) n'inclut aucune ou moins de bulles que ne le fait le premier béton (21).

6. Procédé pour la fabrication d'un récipient en béton (10), dans lequel le récipient en béton (10) inclut :
un premier béton (21), présentant une forme de cuve avec une surface externe et une surface interne ; et
un second béton (22), revêtant la surface externe du premier béton (21), et un des premier et second bétons (21, 22) est utilisé comme une forme pour fabriquer l'autre des premier et second bétons (21, 22),
le premier béton est fabriqué en déposant de la pâte de ciment (211) et des agrégats (212) séparément dans une forme pour fabriquer un premier béton frais, et en solidifiant le premier béton frais dans la forme,
**caractérisé en ce que** le premier béton (21) est plus apte à faire écran au rayonnement que le second béton (22), et le second béton (22) est moins perméable que le premier béton (21), dans lequel la perméabilité est mesurée comme transmissivité hydraulique, perméabilité à l'air ou diffusivité ionique.

7. Procédé selon la revendication 6, dans lequel la pâte de ciment (211) inclut du ciment, et
un rapport de masse des agrégats (212) au ciment est de 5 fois ou plus et de 10 fois ou moins.

8. Procédé selon la revendication 6 ou 7,
dans lequel la pâte de ciment (211) est déposée dans la forme,
les agrégats (212) sont ensuite déposés dans la forme pour fabriquer le premier béton frais, et
le premier béton frais est solidifié pour fabriquer le premier béton (21).

9. Procédé selon la revendication 6 ou 7,
dans lequel les agrégats (212) sont déposés dans la forme,
la pâte de ciment (211) est ensuite déposée dans la forme pour fabriquer le premier béton frais, et le premier béton frais est solidifié pour fabriquer le premier béton (21).

10. Procédé selon l'une quelconque des revendications 6 à 9,
dans lequel un second béton frais est déposé dans une forme,
le second béton frais est ensuite solidifié avec démoussage pour fabriquer le second béton.

11. Procédé selon l'une quelconque des revendications 6 à 10,
dans lequel le récipient en béton (10) inclut de plus un troisième béton (23), revêtant la surface interne du premier béton (21), et le troisième béton (23) est utilisé comme une forme interne pour fabriquer le premier béton (21).

12. Procédé selon la revendication 11,
dans lequel le troisième béton frais est déposé dans une forme,
le troisième béton frais est ensuite solidifié avec démoussage pour fabriquer le troisième béton.
